**Europäisches Patentamt**

(19) **European Patent Office**

**Office européen des brevets**

(11) Numéro de publication: **0 119 875**
**B1**

(12) # FASCICULE DE BREVET EUROPÉEN

(45) Date de publication du fascicule du brevet:
27.04.88

(51) Int. Cl.⁴: **B 60 K 5/04**, B 60 K 17/34

(21) Numéro de dépôt: 84400178.4

(22) Date de dépôt: 26.01.84

(54) Ensemble de propulsion pour véhicule automobile à deux essieux moteurs.

(30) Priorité: 16.02.83 FR 8302509

(43) Date de publication de la demande:
26.09.84 Bulletin 84/39

(45) Mention de la délivrance du brevet:
27.04.88 Bulletin 88/17

(84) Etats contractants désignés:
DE GB IT

(56) Documents cité:
DE-A-1 655 940
DE-A-3 216 203
FR-A-1 124 352
FR-A-1 411 771
US-A-2 197 758

(73) Titulaire: **AUTOMOBILES PEUGEOT, 75, avenue de
la Grande Armée, F-75116 Paris (FR)**
Titulaire: **AUTOMOBILES CITROEN, 62 Boulevard
Victor- Hugo, F-92200 Neuilly- sur- Seine (FR)**

(72) Inventeur: **Le Salver, Robert, Rue des Coteaux,
F-78570 Chanteloup Les Vignes (FR)**
Inventeur: **Poupard, Dominique, 8 Route du Pavé
des Gardes, F-92370 Chaville (FR)**
Inventeur: **Marie, Daniel, 17 bis, Rue François
Villon, F-95430 Auvers- Sur- Oise (FR)**

(74) Mandataire: **Moncheny, Michel, c/o Cabinet
Lavoix 2 Place d'Estienne d'Orves, F-75441 Paris
Cedex 09 (FR)**

EP 0 119 875 B1

## Description

La présente invention est relative à un ensemble de propulsion destiné à entraîner les roues de deux essieux d'un véhicule au moyen d'un groupe motopropulseur disposé transversalement dans le véhicule. Le fait que deux essieux soient moteurs optimise l'adhérence disponible du véhicule à l'accélération, et la position transversale du groupe présente un faible encombrement longitudinal favorisant la logeabilité du véhicule.

Le groupe motopropulseur est généralement disposé au droit d'un essieu, entraînant les roues de cet essieu par des arbres de sortie transversaux, tandis qu'un arbre de sortie longitudinal du groupe est relié, par l'intermédiaire d'un arbre de transmission longitudinal et d'au moins un joint articulé, à un différentiel à renvoi conique disposé au droit de l'autre essieu pour en entraîner les roues. Le groupe et le différentiel sont alors fixés chacun à la structure du véhicule par au moins trois blocs élastiques assurant leur maintien, et les empèchant notamment de basculer par réaction aux couples appliqués aux divers arbres d'entrée et de sortie.

On connaît aussi un ensemble de propulsion dans lequel le groupe motopropulseur situé longitudinalement sur l'essieu avant est relié rigidement à un différentiel placé entre les roues arrière seules motrices. La rigidité de cet ensemble permet de réduire le nombre des blocs de fixation à la structure et de supprimer tout joint articulé entre l'arbre de sortie du groupe et le différentiel.

On sait par ailleurs qu'il est avantageux pour le comportement routier du véhicule que le groupe motopropulseur soit placé entre les deux essieux, et de préférence à proximité de l'essieu arrière, car en cette position la lourde masse du groupe ne présente qu'une relativement faible inertie autour d'un axe vertical passant par le centre de gravité du véhicule, et il s'ensuit une bonne maniabilité de ce dernier, c'est à dire une aisance à changer de cap. Cette disposition est ainsi avantageusement utilisée sur des véhicules à caractère sportif.

Le but de l'invention est de réaliser, pour un véhicule à deux essieux moteurs et à groupe motopropulseur transversal, un ensemble de propulsion cumulant les avantages susmentionnés de simplicité et de bon comportement routier n'existant précédemment que dans d'autres conformations de propulsion, c'est-à-dire d'une part, ne nécessitant que peu de blocs élastiques de fixation à la structure et pas de joint articulé entre le groupe et le différentiel, d'autre part, présentant une faible inertie autour d'un axe vertical passant par le centre de gravité du véhicule.

Selon l'invention, le groupe motopropulseur étant disposé de part et d'autre du plan longitudinal de symétrie du véhicule, entre les deux essieux, et deux arbres longitudinaux de transmission situés au voisinage de ce plan de symétrie reliant chacun le groupe motopropulseur à l'un de deux différentiels à renvoi conique placés respectivement entre les roues des deux essieux, la partie centrale du groupe motopropulseur est reliée rigidement aux carters des deux différentiels par des boîtiers de forme générale tubulaire enfermant chacun l'un des deux arbres longitudinaux, et l'ensemble rigide en croix ainsi constitué est fixé à la structure du véhicule par quatre blocs élastiques disposés au voisinage des extrémités des branches de ladite croix.

Suivant d'autres caractéristiques avantageuses de l'invention

- l'un au moins des blocs élastiques, éventuellement seulement l'un des blocs associés à la branche longitudinale de la croix possède une faible flexibilité en direction longitudinale ;

- l'un au moins des blocs élastiques, éventuellement seulement l'un des blocs associés à la branche transversale de la croix possède une faible flexibilité en direction transversale ;

- l'un au moins des blocs élastiques est fixé de manière réglable sur l'ensemble de propulsion et/ou sur la structure ;

- le groupe motopropulseur étant disposé à proximité de l'essieu arrière, le boîtier enfermant l'arbre longitudinal correspondant à cet essieu est réalisé en une seule pièce avec le carter de la boîte de vitesses et avec une partie centrale du groupe, celle-ci contenant un engrenage conique qui relie l'arbre de sortie de la boîte de vitesses aux deux arbres longitudinaux ;

- un différentiel à glissement limité est interposé entre les deux arbres de transmission et disposé dans le boîtier solidaire de la partie centrale du groupe.

Un exemple de réalisation d'un ensemble de propulsion selon l'invention est décrit ci-après, avec référence aux dessins annexés parmi lesquels :

- la Fig. 1 est une vue simplifiée en perspective d'un tel ensemble ;

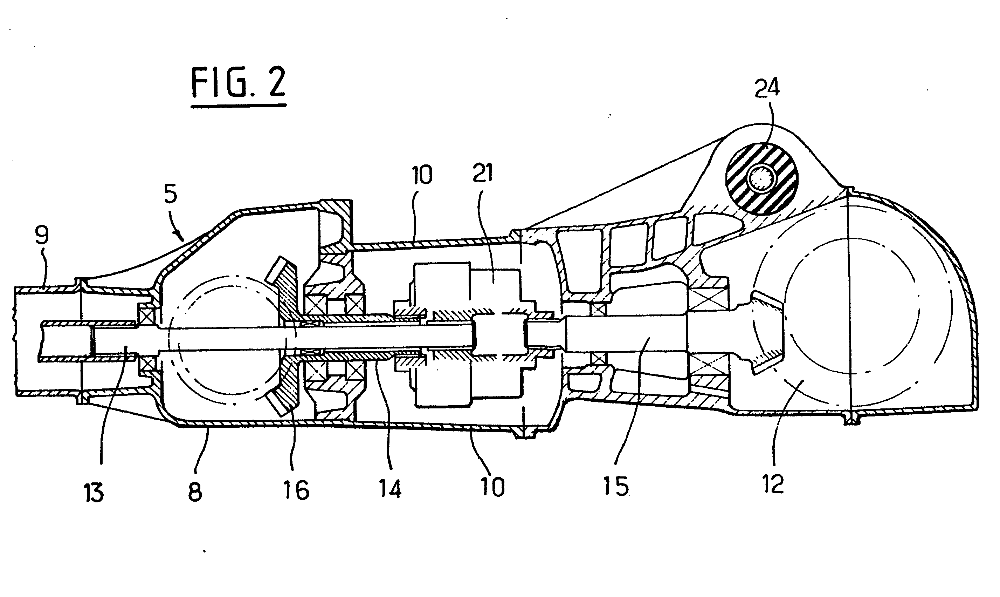

- la Fig. 2 est une vue en coupe axiale d'une partie de cet ensemble suivant la ligne 2-2 de la Fig. 1.

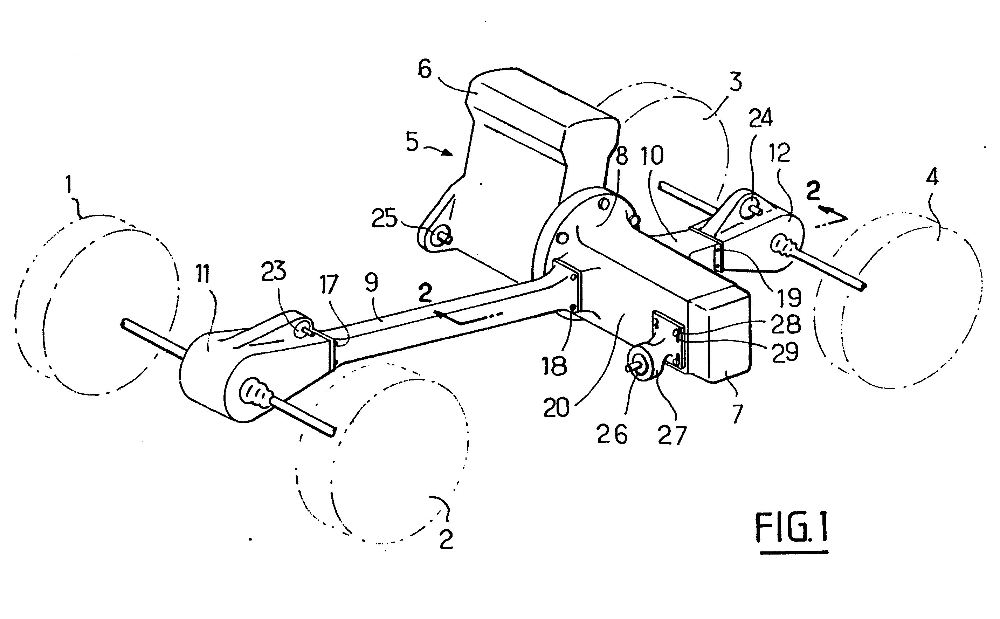

On voit sur la Fig. 1 un ensemble de propulsion destiné à entraîner les roues avant 1, 2 et les roues arrière 3, 4 d'un véhicule automobile. Chaque paire de roues, avant ou arrière, est dans ce texte désignée essieu, quel que soit leur mode de liaison avec la structure du véhicule, cette liaison s'effectuant de préférence, de manière non représentée ici, avec des moyens indépendants pour chaque roue.

L'ensemble de propulsion comporte principalement un groupe motopropulseur 5 comprenant un moteur 6, un embrayage et une boîte de vitesses 7. Ce groupe est disposé transversalement par rapport à la direction de déplacement du véhicule, le moteur et l'embrayage étant, de préférence, situés d'un côté du plan longitudinal de symétrie du véhicule, et la boîte de vitesses de l'autre côté.

Ce groupe 5 est disposé entre les deux essieux, et plus près de l'essieu arrière que de l'essieu avant, et sa partie centrale 8 est reliée rigedement par deux boîtiers 9, 10 de forme générale tubulaire, respectivement à l'un de deux différentiels 11, 12 à renvoi conique situés chacun au droit d'un des essieux pour en entraîner les roues. Les deux boîtiers et les deux différentiels sont sensiblement alignés et situés au voisinage du plan de symétrie du véhicule.

Les boîtiers 9 et 10 renferment des arbres longitudinaux de transmission 13 et 14, respectivement accouplés à l'arbre d'entrée 15 de l'un des différentiels et entraînés par un arbre secondaire de la boîte de vitesses par l'intermédiaire d'un couple d'engrenages coniques 16 contenu dans la partie centrale 8.

Le boîtier avant 9 est relativement long et ses extrémités avant et arrière sont fixées par des vis 17, 18 respectivement au carter du différentiel avant 11 et à la partie centrale 8 du groupe.

Le boîtier arrière 10 est relativement court et seule son extrémité arrière est fixée par des vis 19 au carter du différentiel arrière 12, tandis que son extrémité avant est solidaire de la partie centrale 8 ainsi que du carter principal 20 de la boîte de vitesses le boîtier 10, la partie 8 du groupe et le carter 20 sont ainsi réalisés en une seule pièce. Le boîtier 10 est suffisamment large pour contenir un différentiel à glissement limité 21 de type classique reliant par un train d'engrenages planétaires les arbres longitudinaux 13 et 14 et réalisant un accouplement à friction entre l'un de ces arbres et l'arbre 15 d'entrée du différentiel 12.

Le groupe 5, les boîtiers 9, 10 et les carters des différentiels 11, 12 étant rigidement fixés les uns aux autres comme indiqué précédemment, ils forment un ensemble rigide ayant la forme générale d'une croix. Pour réaliser la fixation souple de cet ensemble à la structure du véhicule, il est prévu quatre blocs élastiques deux blocs médians 23, 24 disposés au voisinage du plan vertical contenant l'axe des arbres longitudinaux 13, 14, 15, sont respectivement portés par le carter de l'un des deux différentiels 11, 12 ; deux blocs latéraux 25, 26, disposés de part et d'autre dudit plan et à une distance notable de celui-ci, sont portés respectivement l'un par le moteur 6, l'autre par la boîte de vitesses 7.

Chaque bloc est constitué par un manchon en élastomère dans lequel est inséré un axe destiné à être fixé en chape à une ferrure elle-même fixée à la structure du véhicule de manière éventuellement réglable. Le manchon 26 est porté par un support 27 fixé au carter 20 de la boîte de vitesses par des vis 28 traversant des lumières 29 du support autorisant le réglage de sa position sur la boîte de vitesses.

L'axe de tous les manchons est horizontal. Ceux-ci travaillent donc en compression dans la direction verticale de manière à présenter une bonne résistance vis à vis des forces verticales statiques et dynamiques appliquées principalement au groupe 5.

Les manchons 23, 24 ont leurs axes parallèles à la direction transversale du véhicule ; ils travaillent donc en compression dans la direction longitudinale et présentent une faible flexibilité dans cette direction. Ils transmettent ainsi correctement, et directement du carter de chaque différentiel 11, 12 à la structure, la poussée due à l'inertie de l'ensemble de propulsion lors des accélérations ou décélérations du véhicule.

L'axe du manchon 26 est disposé longitudinalement. Celui-ci travaille donc en compression dans la direction transversale du véhicule et présente ainsi une faible flexibilité dans cette direction, ce qui lui permet de transmettre correctement à la structure toute poussée transversale due principalement à la force centrifuge s'exerçant sur l'ensemble de propulsion quand le véhicule se déplace dans une courbe.

Cet ensemble de propulsion s'avère compact et relativement simple puisqu'il ne nécessite que quatre points de fixation à la structure, et qu'aucun joint articulé de transmission n'est utilisé entre le groupe 5 et les différentiels 11, 12. Par ailleurs, l'essentiel de sa masse étant situé au plus près du centre de gravité du véhicule, celui-ci bénéficie non seulement d'une adhérence optimale grâce à la bonne répartition des charges sur les quatre roues, notamment à l'accélération puisque les deux essieux sont moteurs, mais aussi d'une inertie réduite autour de l'axe vertical passant par son centre de gravité, d'où résulte une bonne maniabilité du véhicule, c'est à dire une vivacité de réponse aux sollicitations de la direction. Une telle disposition convient ainsi particulièrement aux véhicules à caractèrs sportif.

Dans le dispositif décrit, les blocs élastiques médians 23 et 24 sont situés au-dessus des différentiels 11 et 12.

En variante, ils peuvent être situés en-dessous. Une disposition avantageuse consiste à utiliser deux différentiels identiques mais inversés pour que le sens de rotation de leurs arbres de sortie soit le même. Dans ce cas l'un des deux blocs est au-dessus, et l'autre au-dessous du différentiel correspondant.

En variante également, seul l'un des deux blocs médians 23, 24 possède une faible flexibilité en direction longitudinale, de manière à transmettre à la structure la majeure partie de la poussée due à l'inertie de l'ensemble de propulsion. De même, le bloc 25 reliant le moteur à la structure peut posséder une faible flexibilité dans l'une des directions, transversale ou longitudinale, de manière à participer notablement à la poussée exercée par l'ensemble de propulsion sur la structure dans la direction correspondante.

## Revendications

1. Ensemble de propulsion pour véhicule automobile, comprenant un groupe motopropulseur disposé transversalement par rapport à la direction longitudinale du véhicule, de part et d'autre de son plan longitudinal de symétrie, entre un essieu avant à deux roues motrices (1, 2) et un essieu arrière également à deux roues motrices (3, 4), deux arbres longitudinaux de transmission (13, 14) situés au voisinage de ce plan de symétrie reliant chacun le groupe motopropulseur (5) à l'un de deux différentiels (11, 12) à renvoi conique placés, respectivement, entre les roues des deux essieux, caractérisé en ce que la partie centrale (8) du groupe motopropulseur (5) est reliée rigidement aux carters des deux différentiels (11, 12) par des boîtiers (9, 10) de forme générale tubulaire renfermant chacun l'un des deux arbres longitudinaux (13, 14) et l'ensemble rigide en croix ainsi constitué est fixé à la structure du véhicule par quatre blocs élastiques (23, 24, 25, 26) disposés au voisinage des extrémités des branches de ladite croix.

2. Ensemble suivant la revendication 1, caractérisé en ce que les quatre blocs sont disposés, respectivement, sur les deux carters de différentiels, sur le moteur et sur la boîte de vitesses.

3. Ensemble suivant la revendication 1 ou 2, caractérisé en ce que l'un au moins des blocs élastiques (23, 26), éventuellement seulement l'un des blocs associés à la branche longitudinale de la croix possède une faible flexibilité en direction longitudinale.

4. Ensemble suivant l'une des revendications 1 à 3, caractérisé en ce que l'un au moins des blocs élastiques (23, 26), éventuellement seulement l'un des blocs associés à la branche transversale de la croix possède une faible flexibilité en direction transversale.

5. Ensemble suivant l'une des revendications 1 à 4, caractérisé en ce que l'un au moins des blocs élastiques (23, 26) est fixé de manière réglable sur l'ensemble de propulsion et/ou sur la structure.

6. Ensemble suivant l'une des revendications 1 à 5, caractérisé en ce que le groupe motopropulseur (5) étant disposé à proximité de l'essieu arrière, le boîtier (10) renfermant l'arbre longitudinal (15) correspondant à cet essieu est réalisé en une seule pièce avec le carter (20) de la boîte de vitesses (7) et avec une partie centrale (8) du groupe, celle-ci contenant un engrenage conique (16) qui relie l'arbre de sortie de la boîte de vitesses aux deux arbres longitudinaux (13, 14).

7. Ensemble suivant la revendication 6, caractérisé en ce qu'un différentiel (21) à glissement limité interposé entre les deux arbres de transmission (13, 14) est disposé dans le boîtier (10) solidaire de la partie centrale (8) du groupe.

## Patentansprüche

1. Antriebsaggregat für Kraftfahrzeuge, mit einem Triebwerk, welches quer zur Längsrichtung des Fahrzeugs beiderseits von dessen Symmetrielängsebene zwischen einer Vorderachse mit zwei Antriebsrädern (1, 2) und einer Hinterachse mit ebenfalls zwei Antriebsrädern (3, 4) angeordnet ist, zwei Antriebslängswellen (13, 14), welche im Bereich dieser Symmetrieebene angeordnet sind und jeweils das Triebwerk (5) mit dem einen von zwei Kegelraddifferentialen (11, 12) verbinden, die jeweils zwischen den Rädern der zwei Achsen angeordnet sind, dadurch gekennzeichnet, daß das Mittelteil (8) des Triebwerks (5) starr mit den Gehäusen der beiden Differentiale (11, 12) durch im wesentlichen rohrförmige Gehäuse (9, 10) verbunden ist, von denen jedes eine der beiden Längswellen (13, 14) umschließt, und daß die so gebildete starre Einheit in Form eines Kreuzes am Fahrzeugaufbau durch vier elastische Blöcke (23, 24, 25, 26) befestigt ist, die im Bereich der Enden der Balken des Kreuzes angeordnet sind.

2. Aggregat nach Anspruch 1, dadurch gekennzeichnet, daß die vier Blöcke jeweils auf den beiden Differentialgehäusen, auf dem Motor und auf dem Wechselgetriebe angeordnet sind.

3. Aggregat nach Anspruch 1 oder 2, dadurch gekennzeichnet, daß wenigstens einer der elastischen Blöcke (23, 26), gegebenenfalls nur einer der dem Längsbalken des Kreuzes zugeordneten Blöcke, eine geringfügige Elastizität in Längsrichtung besitzt.

4. Aggregat nach einem der Ansprüche 1 bis 3, dadurch gekennzeichnet, daß wenigstens einer der elastischen Blöcke (23, 26), gegebenenfalls nur einer der dem Querbalken des Kreuzes zugeordneten Blöcke, eine geringfügige Elastizität in Querrichtung besitzt.

5. Aggregat nach einem der Ansprüche 1 bis 4, dadurch gekennzeichnet, daß wenigstens einer der elastischen Blöcke (23, 26) einstellbar auf dem Antriebsaggregat und/oder dem Aufbau befestigt ist.

6. Aggregat nach einem der Ansprüche 1 bis 5, dadurch gekennzeichnet, daß, wobei das Triebwerk (5) in der Nähe der Hinterachse angeordnet ist, das die dieser Achse entsprechende Längswelle (15) umschließende Gehäuse (10) einstückig mit dem Gehäuse (20) des Wechselgetriebes (7) und mit einem Mittelteil (8) des Triebwerks ausgebildet ist, wobei das Mittelteil ein Kegelradgetriebe (16) enthält, welches die Ausgangswelle des Wechselgetriebes mit den beiden Längswellen (13, 14) verbindet.

7. Aggregat nach Anspruch 6, dadurch gekennzeichnet, daß ein zwischen die beiden Antriebswellen (13, 14) gelegtes Differential (21) mit begrenztem Schlupf in dem mit dem Mittelteil (8) des Triebwerks einstückigen Gehäuse (10) angeordnet ist.

## Claims

1. A propelling assembly for a motor vehicle, comprising a motor drive unit disposed transversely to the longitudinal direction of the vehicle on each side of its longitudinal plane of symmetry, between a front axle having two driving wheels (1, 2) and a rear axle also having two driving wheels (3, 4), two longitudinal transmission shafts (13, 14) located in the vicinity of said plane of symmetry each connecting the motor-drive unit (5) to one of two differentials (11, 12) having bevel gear transmission respectively placed between the wheels of the two axles, characterised in that the central part (8) of the motordrive unit (5) is rigidly connected to the housings of the two differentials (11, 12) by cases (9, 10) of general tubular shape, each of which encloses one of the two longitudinal shafts (13, 14), and the rigid cross-shaped assembly thus formed is fixed to the structure of the vehicle by four resilient blocks (23, 24, 25, 26) arranged in the vicinity of the ends of the branches of said cross.

2. An assembly according to claim 1, characterised in that the four blocks are disposed respectively on the two differential housings, on the motor and on the gearbox.

3. An assembly according to claim 1 or 2, characterised in that at least one of the resilient blocks (23, 26), possibly only one of the blocks associated with the longitudinal branch of the cross, has low flexibility in the longitudinal direction.

4. An assembly according to one of claims 1 to 3, characterised in that at least one of the resilient blocks (23, 26), possibly only one of the blocks associated with the transverse branch of the cross, has low flexibility in the transverse direction.

5. An assembly according to one of claims 1 to 4, characterised in that at least one of the resilient blocks (23, 26) is fixed in an adjustable manner on the propelling assembly and/or on the structure.

6. An assembly according to any one of claims 1 to 5, characterised in that the motor-drive unit (5) is disposed in the vicinity of the rear axle, the case (10) enclosing the longitudinal shaft (15) corresponding to said axle is produced in a single piece with the housing (20) of the gearbox (7) and with a central part (8) of the unit, said central part containing bevel gearing (16) which connects the output shaft of the gearbox to two longitudinal shafts (13, 14).

7. An assembly according to claim 6, characterised in that a limited slip differential (21) interposed between the two transmission shafts (13, 14) is disposed in the case (10) connected to the central part (8) of said unit.

FIG.1

FIG. 2